(19) Europäisches Patentamt
European Patent Office
Office européen des brevets

(11) EP 4 137 982 A1

(12) EUROPEAN PATENT APPLICATION

(43) Date of publication:
22.02.2023 Bulletin 2023/08

(51) International Patent Classification (IPC):
G06F 30/27 (2020.01)   G06N 5/00 (2006.01)

(21) Application number: 21192145.7

(22) Date of filing: 19.08.2021

(52) Cooperative Patent Classification (CPC):
G06F 30/27; G06N 5/00

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Siemens Aktiengesellschaft
80333 München (DE)

(72) Inventors:
• Joblin, Mitchell
81825 München (DE)
• Mogoreanu, Serghei
81827 München (DE)

(54) METHOD AND SYSTEM FOR AUTOMATED SUPPORT OF A DESIGN OF A TECHNICAL SYSTEM

(57) A machine learning model (MLM) processes a current partial design (CPD) of a technical system and a candidate component (CC) for a next design step of designing the technical system. The model computes a probability distribution (KPI-PD), which is a probability distribution over changes of a design KPI (D-KPI) if the candidate component (CC) is added to the current partial design (CPD), with the design KPI (D-KPI) describing a property of the technical system, and a predicted impact value (PIV) predicting an absolute value of the design KPI (D-KPI) or a change of the design KPI (D-KPI) if the candidate component (CC) is added to the current partial design (CPD).

FIG 2

EP 4 137 982 A1

**Description**

The invention relates to a method and system for automated support of a design of a technical system. Further, the invention relates to a computer program product and computer readable storage media.

In industrial manufacturing engineers are often tasked with the problem of finding an optimal design for a complex technical system, e.g., a hybrid car where suitable combinations of components have to be found. An optimal design can be defined by one or more key performance indicators (KPI) which describe the properties that are of interest.

For example, in automotive and aerospace product design, part of the design process is to identify a subset of components that are available for use and connecting the components appropriately to achieve a valid and performant design, i.e., a design for a technical system that will work well under real conditions.

However, one challenge in finding a reasonably good or an optimal design is attributed to the extremely large design space, i.e., the large number of possible combinations of the components. Thus, many millions or even billions of designs are technically valid and will work in reality, but they are not ideal with respect to one or more KPIs. E.g., a car may be very robust against impacts from the front side, but not from the sides, the aerodynamic resistance might be hampered etc.

Hence, the design process is relied upon the engineer's experience or domain knowledge to make decisions about how to improve a design towards a desired goal.

The proposed design can then be simulated to determine how well that design performs with respect to the KPIs which are of interest. By simulation is meant that a behavior of the technical system represented by the design is approximated by a deterministic model in which depending on input data, output data which are of interest, are determined.

Engineers leverage their experience to decide which designs are most promising, but still require feedback from simulation environments to determine if the requirements are satisfied.

It is an object of the invention to provide an automated technical solution that supports the design of a technical system.

The objectives of the invention are solved by the independent claims. Further advantageous arrangements and embodiments of the invention are set forth in the respective dependent claims.

According to the method for automated support of a design of a technical system, the following operations are performed by modules, and wherein the modules are software modules executed by one or more processors and/or hardware modules:

- receiving, by a machine learning model, a current partial design of a technical system and a candidate component for a next design step of designing the technical system,
- computing, by the machine learning model,

    - a probability distribution, which is a probability distribution over changes of a design key performance indicator if the candidate component is added to the current partial design, with the design key performance indicator describing a property of the technical system, and/or
    - a predicted impact value predicting an absolute value of the design key performance indicator or a change of the design key performance indicator if the candidate component is added to the current partial design, and

- outputting, by the machine learning model and/or a user interface, the probability distribution and/or the predicted impact value.

The system for automated support of a design of a technical system comprises:

- a machine learning model, configured for

    - receiving a current partial design of a technical system and a candidate component for a next design step of designing the technical system, and
    - computing

        - a probability distribution, which is a probability distribution over changes of a design key performance indicator if the candidate component is added to the current partial design, with the design key performance indicator describing a property of the technical system, and/or
        - a predicted impact value predicting an absolute value of the design key performance indicator or a change of the design key performance indicator if the candidate component is added to the current partial design, and

- a user interface with a display, configured for outputting the probability distribution and/or the predicted impact value.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "iterating", "simulating", "computing" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices or any other communication devices that can process data with computer support, processors and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

Of course, the machine learning model can compute the probability distribution and/or the predicted impact value for multiple KPIs of the technical system (providing an individual distribution/value for each KPI).

Existing solutions known from the state of the art need completed designs in order to perform a simulation for determining the design KPI, in other words, the design needs to be fully specified. In contrast to the state of the art, the method and system allow to give feedback regarding the design KPI (the expected performance characteristics of the technical system) to an engineer during the design process. This allows the engineer to recognize the step(s) in the design process that lead to particular outcomes. Furthermore, at the point in time when a critical design decision is made regarding the choice of the candidate component, the engineer has guidance on the expected impact that decision will have on the design KPI. In essence, this enables the engineer to recognize critical cause-effect relationships during design time.

In particular, adding the candidate component to the current partial design leads to a second partial design that cannot be simulated as it does not describe a complete technical system. Of course, the method can be iterated by adding components to a growing partial design until a completed design is reached.

The method and system, or at least some of their embodiments, can drastically shorten the feedback loop between engineers in charge of designing a new technical system/product and a simulation environment used for estimating the performance characteristics of said product. This can potentially lead to numerous advantages, such as reduced time/cost to design complex technical systems, reduced time/costs to identify optimal designs, reduction in errors produced by engineers choosing inadequate components, and reduced costs in simulating designs that are inadequate. Furthermore, it provides an opportunity to bring new products to the market earlier and/or with better KPI values thanks to being able to evaluate a higher number of design changes in the same amount of time.

In an embodiment of the method and system, the current partial design is a graph-based representation, and the machine learning model is graph-based.

In an embodiment of the method and system, the machine learning model contains at least one graph neural network, at least one graph convolutional neural network, and/or at least one Bayesian neural network.

In an embodiment of the method and system, the machine learning model computes individual probability distributions and/or predicted impact values for several next component options. The user interface outputs the individual probability distribution and/or predicted impact value for each next component option.

An embodiment of the method comprises the additional operations of

- detecting, by the user interface, a user interaction selecting one of the next component options, and
- completing, by a processor, the current partial design with the selected next component option, thereby producing a completed design.

An embodiment of the method comprises the additional operation of automatically manufacturing, by an automated plant, the completed design, thereby producing the technical system.

Depending on the technical system, the automated plant for automatically manufacturing the completed design can be, for example, a 3D printer, or a complex production facility with automated robots.

An embodiment of the method comprises the initial operation of training, by a training module, the machine learning model with training examples, with each training example containing

- a partial design,
- a candidate next component, and
- a best value for the design key performance indicator computed by a simulation environment for a completed design, wherein the completed design is reachable and feasible when adding the candidate next component to the partial design.

According to this embodiment, the machine learning model is trained to predict an upper bound on the design KPI for the portion of the design space that is available once the decision has been made to select the respective candidate next component.

An embodiment of the method, the training examples are initially prepared with the following operations:

- generating, by a processor executing a SAT solver, the training examples by taking partial designs and candidate next components as input and sampling with feasibility constraints in order to produce expanded designs, with the expanded designs consisting of samples of a design space that are each reachable and feasible given a set of component compatibility constraints when combining a partial design with one of the candidate next components,
- iterating the generating operation, using the expanded designs as partial designs, until completed designs are reached, and
- simulating, by the simulation environment, each completed design in order to compute its value for the design key performance indicator.

The computer program is being executed by one or more processors of a computer system and performs the method.

The computer program product has instructions executable by one or more processors of a computer system, wherein execution of the instructions causes the computer system to perform the method.

The computer-readable storage media have stored thereon instructions executable by one or more processors of a computer system, wherein execution of the instructions causes the computer system to perform the method.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1       shows an incremental process of designing a complex system,

Fig. 2       shows input and output of a machine learning model MLM,

Fig. 3       shows a workflow to produce training data for the machine learning model MLM,

Fig. 4       shows a user interface displaying results of the machine learning model MLM to an engineer during a design step,

Fig. 5       shows a flowchart of a possible exemplary embodiment of a method for automated support of a design of a technical system,

Fig.6a       shows an example of a graphical representation or knowledge graph of a data structure used for a subset of components of an electric vehicle, comprising various components and attributes having numerical values for one or more components,

Fig. 6b       shows an example of a table with numerical attributes for the motors used in the architecture of Fig. 6a,

Fig. 7       provides a schematic overview of a workflow for an advantageous embodiment for deriving indicators that describe the performance of a system,

Fig. 8a and 8b       show an example of isomorphic data structures,

Fig. 9       shows a schematic view of a determination unit which can be used to derive a performance indicator,

Fig. 10       shows an example of how actual complex systems, i.e., real-world systems are translated into knowledge graphs by using a standardized modelling language,

Fig. 11 and 12       an example of the standardized network model of Fig.10, centre, in more detail,

Fig. 13       shows the knowledge graph of the hybrid vehicle at the top right centre of Fig. 10 in more detail,

Fig. 14       shows a high-level overview of possible components used in a neural network architecture which is obtained by machine learning, and which describes the complex system,

Fig. 15       shows a schematic overview of an iteration step for a machine learning process for obtaining a neural network architecture which describes a complex system,

Fig. 16       shows a schematic overview of creating a graph neural network architecture by an agent for a specific system design,

Fig. 17       shows a schematic overview of a reinforcement machine learning process in which an agent is created, which is able to find a suitable graph neural network architecture for an unknown system design, and

Fig. 18      shows a result neural network architecture achieved by an agent trained by a machine learning method for a system design that has not been part of the training data.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described modules can each be hardware modules or software modules. For example, a software module can be a software library; an individual procedure, subroutine, or function; or, depending on the programming paradigm, any other portion of software code that implements the function of the software module. A combination of hardware modules and software modules can occur, in particular, if some of the effects according to the invention are preferably exclusively implemented by special hardware (e.g., a processor in the form of an ASIC or FPGA) and some other part by software.

Software suites, i.e., collections of software available to support the design or and configuration of complex systems, are offered for various applications such as construction tasks, industry automation designs or chemistry. Examples at Siemens are e.g., SimCenter™ or TIA (totally integrated automation) portal.

These tools can be used to create a wide variety of technical systems ranging from hybrid vehicles and quadcopters to factory automation systems.

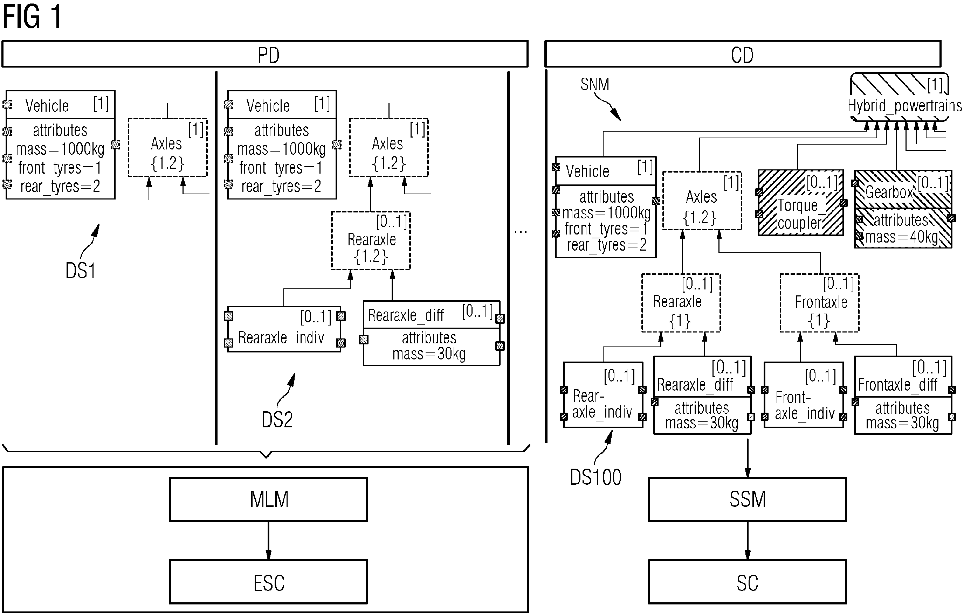

Fig. 1 shows an illustration of the incremental process of designing a complex system. With a first design step DS1, a second design step DS2, ..., and a hundredth design step DS100, from left to right a design is incrementally built up from individual components. The first design step DS1 and the second design step DS2 each provide a partial design PD, while the hundredth design step DS100 provides a completed design CD.

Simulation and/or surrogate models SSM, for example a simulation environment, determine system characteristics SC as feedback on the design. However, while the design process involves several partial designs PD, this feedback is only available for the completed design CD.

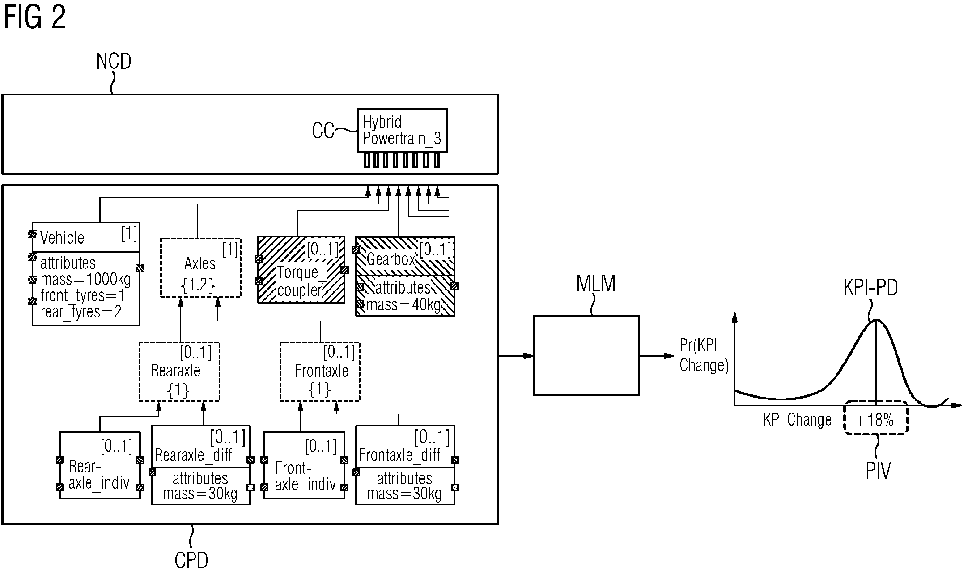

The embodiments shown in Figs. 2 - 5 provide a machine learning model MLM capable to compute estimated system characteristics ESC (in the form of one or more design KPIs) for the partial designs PD.

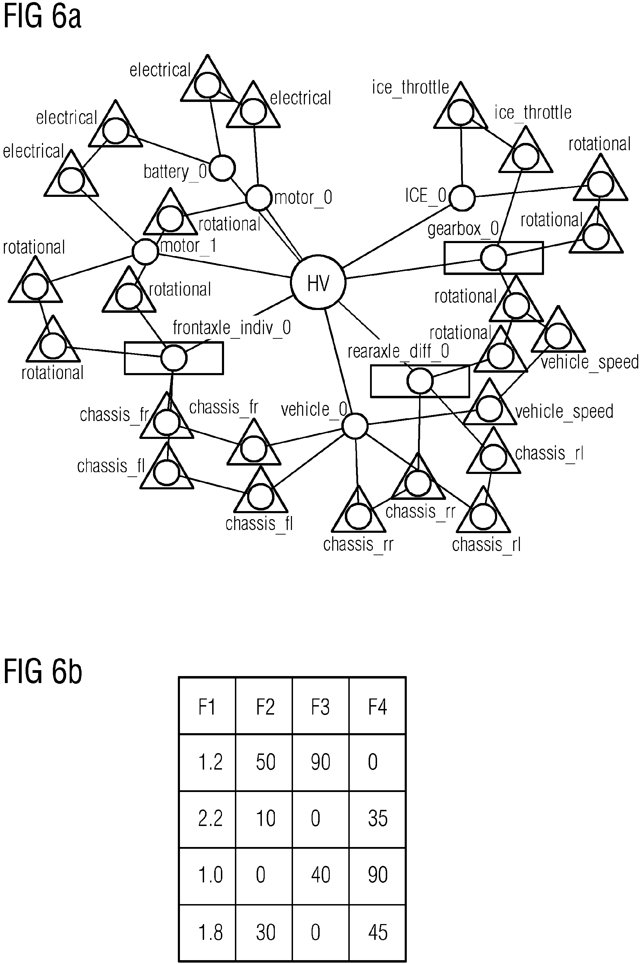

Fig. 2 shows input and output of the machine learning model MLM. The machine learning model MLM takes as input a current partial design CPD, which can be specified with a graph-based representation as will be described with regard to Figs. 6 - 18, and a candidate component CC for the next design step, which is chosen with a next component decision NCD. The output of the machine learning model MLM is a probability distribution KPI-PD, which is a probability distribution over KPI changes if the candidate component CC is chosen. In addition or as an alternative, the output of the machine learning model can be a predicted impact value PIV predicting an impact on an KPI change if the candidate component CC is chosen, for example +18 %. Of course, the machine learning model MLM can compute the probability distribution KPI-PD and/or the predicted impact value PIV for multiple KPIs.

For example, the current partial design CPD can be modelled with complex, graph-structured objects that have an inherent topology, as will be described with regard to Figs. 6 - 18.

The machine learning model MLM can be any model capable of encoding graph structured data, for example one of the models that will be described with regard to Figs. 6 - 18, and capable of predicting a probability distribution over a continuous or discrete output space, for example, a Bayesian neural network.

In a variant of the embodiment, the machine learning model MLM is not capable of producing probabilistic outputs. In this case, the output of the machine learning model MLM is the predicted impact value PIV, which is a single point estimate of the KPI (for example, its expected absolute value or its expected percental change).

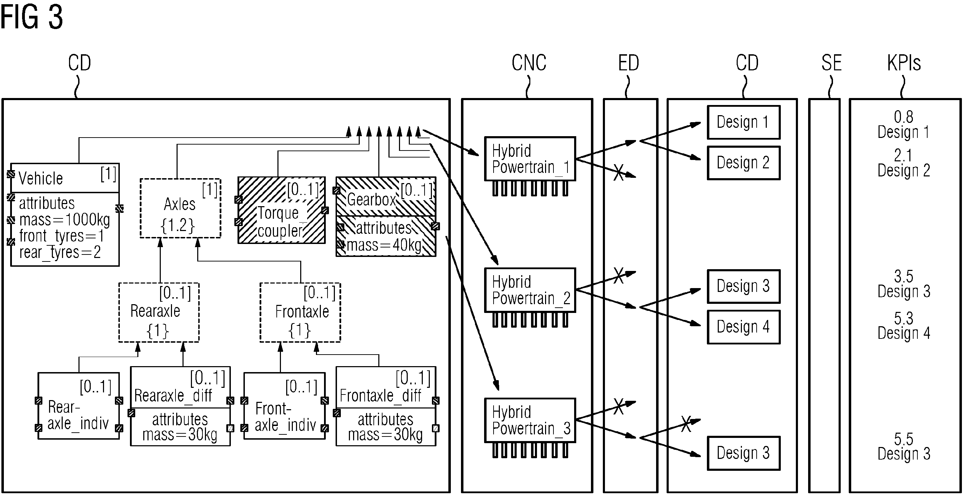

Fig. 3 shows a workflow to produce training data for the machine learning model MLM. The procedure begins with a partial design PD and a set of candidate next components CNC to be added next. Both the partial design PD as well as the candidate next components CNC need to be valid.

The follow-up step uses sampling with feasibility constraints to produce expanded designs ED, consisting of samples of the design space that are each reachable from one of the candidate next components CNC. The crosses indicate portions of the design space that are considered infeasible given a set of component compatibility constraints. These constraints significantly reduce the necessary search space. The expanded designs ED can be computed with a SAT (Boolean satisfiability) solver that helps to identify the space of feasible designs. The SAT solver determines if there exists an interpretation that satisfies a given Boolean formula which represents the above-mentioned component compatibility constraints as a Boolean satisfiability problem (SAT).

Sampling continues iteratively, for example by using the expanded designs ED as partial designs PD in combination with other candidate next components CNC, until completed designs CD are reached.

The completed designs CD are then provided to a simulation environment SE. The simulation environment SE produces the design KPIs (e.g., vehicle acceleration). Training examples are produced by taking the partial design PD, one of the candidate next components CNC, and the most optimal KPI computed from a completed design CD that is reachable and feasible after adding the candidate next component CNC to the partial design PD.

Essentially, the machine learning model MLM is trained to predict an upper bound on the KPI for the portion of the design space that is available once the decision has been made to select the respective candidate next component CNC.

To implement the training procedure shown in Fig. 3, the following modules must be available:

- A collection of previously created product designs (which are completed designs) to be used for generating multiple instances of partial designs PD for training the machine learning model MLM. Ideally, the previously created product designs contain information for re-constructing the sequence of steps performed by the engineers to create them, allowing for efficient generation of the partial designs PD as training samples. When this information is not available, methods such as topological ordering of graphs can be applied in order to approximate the sequence of steps and their corresponding partial designs PD.
- The simulation environment SE for estimating the performance characteristics of a given completed design CD.
- A set of feasibility constraints / design constraints associated with the usage/coupling of various components.
- A SAT (Boolean satisfiability) solver for identifying the space of feasible designs in order to compute the expanded designs ED.

The simulation environment SE is a simulation environment as known from the state of the art, capable of providing information about characteristics (KPIs) of a technical system represented by a completed design CD. In order to compute the characteristics, the simulation environment SE models the physics of the technical system. Since a partial design PD does not represent a technical system, it cannot be processed/simulated by the simulation environment SE due to missing parameters in the physics equations.

As an alternative to the simulation environment SE, a surrogate model can be used to approximate the simulation with the primary goal of speeding up the computation of the characteristics of the technical system as represented by the completed design CD.

The training workflow is data-driven, as it can leverage a large collection of existing product designs represented in the form of graphs for achieving its goal.

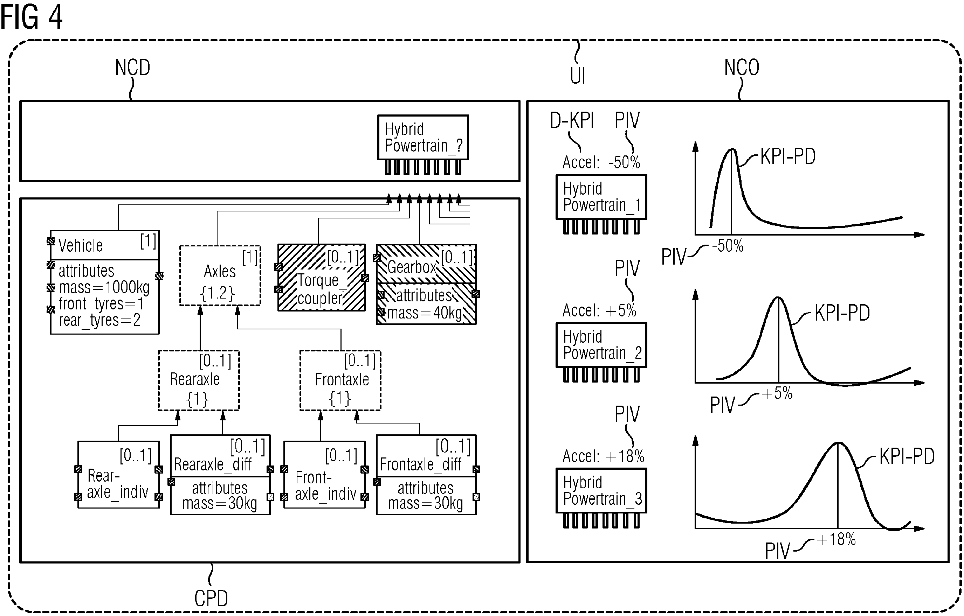

Fig. 4 shows a user interface UI displaying results of the machine learning model MLM to an engineer during a design step. The panel on the right shows next component options NCO that have been computed by the machine learning model MLM. The lower left box contains the current partial design CPD and the box above represents the next component decision NCD that the engineer needs to make, which is, in this case, the choice of hybrid power train. The right panel shows three next component options NCO. For each next component option NCO, the output of the machine learning model MLM provides the engineer with a predicted impact value PIV, which is a high level estimate of the expected change in a design KPI D-KPI, here acceleration, if that particular component is chosen. In addition, for each next component option NCO, a probability distribution KPI-PD provides a more detailed view on the range of possible KPI values and their corresponding probability if that component is chosen.

In other words, Fig. 4 provides an example illustrating how the output of the machine learning model MLM could be displayed to a user. The user has a current partial design CPD and must make a next component decision NCD regarding which hybrid powertrain to use. The machine learning model MLM provides an estimate of the expected change to the design KPI D-KPI (for example, vehicle acceleration), if a particular hybrid powertrain is chosen. The machine learning model MLM also provides a probability distribution KPI-PD to indicate the probability that a given choice produces a particular KPI improvement. In this case, the next component option NCO "Hybrid Powertrain_3" appears to lead to the largest improvement.

In a nutshell, the embodiments shown in Figs. 1 - 4 use a machine learning model MLM that provides feedback to engineers about a current partial design CPD. At least some of the embodiments include:

(1) the machine learning model MLM, which is graph-based, for example one of the models that will be described with regard to Figs. 6 - 18,
(2) a workflow to train the machine learning model MLM as shown in Fig. 3, and
(3) a user interface UI as shown in Fig. 4 to display the prediction from the machine learning model MLM to guide an engineer toward optimal design choices.

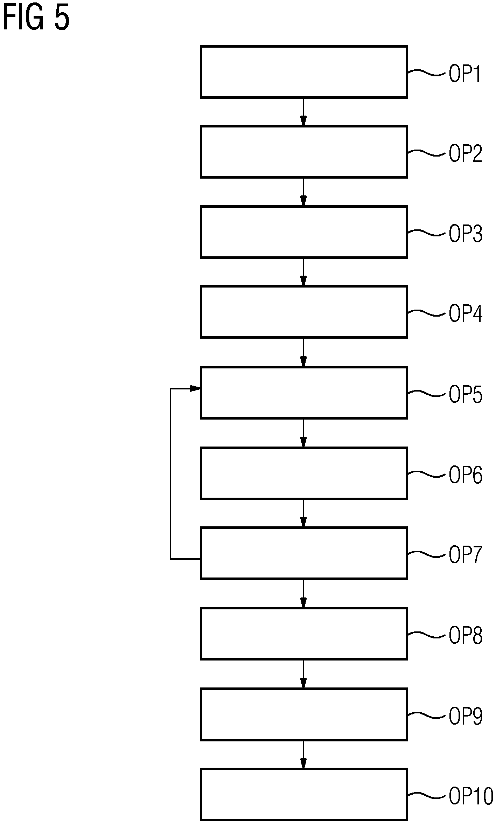

Fig. 5 shows a flowchart of a possible exemplary embodiment of a method for automated support of a design of a technical system.

The embodiment begins with a training procedure, for example the training procedure that was described with regard to Fig. 3.

In order to produce training examples, the following operations are performed:

- generating OP1, by a processor executing a SAT solver, the training examples by taking partial designs PD (as shown in Fig. 3) and candidate next components CNC as input and sampling with feasibility constraints in order to produce expanded designs ED, with the expanded designs ED consisting of samples of a design space that are each reachable and feasible given a set of component compatibility constraints when combining a partial design PD with one of the candidate next components CNC,

- iterating OP2 the generating OP1 operation, using the expanded designs ED as partial designs PD, until completed designs CD are reached, and

- simulating OP3, by a simulation environment SE, each completed design CD in order to compute its value for the design KPI D-KPI.

Afterwards, the following operation is performed:

- training OP4, by a training module, the machine learning model MLM (shown in Fig. 2) with the training examples, with each training example containing

    - a partial design PD as shown in Fig. 3,
    - a candidate next component CNC, and
    - a best value for the design KPI D-KPI computed by the simulation environment SE for a completed design CD, wherein the completed design CD is reachable and feasible when adding the candidate next component CNC to the partial design PD.

During design of a technical system, the following operations are performed as automated support of the design process:

- receiving OP5, by the machine learning model MLM as shown in Fig. 2, a current partial design CPD of the technical system and a candidate component CC for a next design step of designing the technical system (for example, the candidate component CC could have been selected by an engineer and/or have been suggested by a design support system),

- computing OP6, by the machine learning model MLM as shown in Fig. 2,

    - a probability distribution KPI-PD, which is a probability distribution over changes of a design key performance indicator D-KPI if the candidate component CC is added to the current partial design CPD, with the design key performance indicator D-KPI describing a property of the technical system, and/or

    - a predicted impact value PIV predicting an absolute value of the design key performance indicator D-KPI or a change of the design key performance indicator D-KPI if the candidate component CC is added to the current partial design

CPD, and

- outputting OP7, by the machine learning model MLM and/or a user interface UI as shown in Fig. 4, the probability distribution KPI-PD and/or the predicted impact value PIV.

For example, the user interface UI has a display for outputting the information.

By adding the candidate component CC to the current partial design CPD (or selecting a different component for evaluation), a user can cause the automated support system to repeat/iterate the operations OP5 - OP7, thereby building a growing partial design towards completion.

In order to better support the user in accordance with the embodiment shown in Fig. 4, the machine learning model MLM can compute individual probability distributions KPI-PD and/or predicted impact values PIV for several next component options NCO. The user interface UI then outputs the individual probability distribution KPI-PD and/or predicted impact value PIV for each next component option NCO as shown in Fig. 4.

Completion of the design is achieved with the final operations of

- detecting OP8, by the user interface UI, a user interaction selecting one of the next component options NCO, and

- completing OP9, by a processor, the current partial design CPD with the selected next component option NCO, thereby producing a completed design CD.

Once the design has been completed, in can be produces with the operation of automatically manufacturing OP10, by an automated plant, the completed design CD, thereby producing the technical system.

The following description as well as Figs. 6 - 18 have been taken from previous patent applications EP 20191767.1 and EP 21161296.5. They mainly serve as illustration to the person skilled in the art how the partial designs PD can be modelled with graph-based representations, and how the machine learning model MLM can be implemented.

In Fig. 6a a schematic drawing of a section of a data architecture for a specific vehicle is depicted. This graphical representation of the data structure is denoted also as "knowledge graph". The data structure is a formal representation of the engineering design which comprises heterogenous information about components, component properties and how and which of the components are related, thus is multirelational. Thus, the shown data architecture can be derived from an engineering specification. This is what is usually provided by the customer for whom a specific design, e.g., of a hybrid car, is made. From this specification the nodes and their attributes, the type of the attribute and the edges, i.e., source and target node, can be extracted. Thus, a list of nodes representing the components with their type can be extracted. Therefrom, by using graph regressors an architecture can be derived which serves as input data of graph convolutional neuronal network (GCNN).

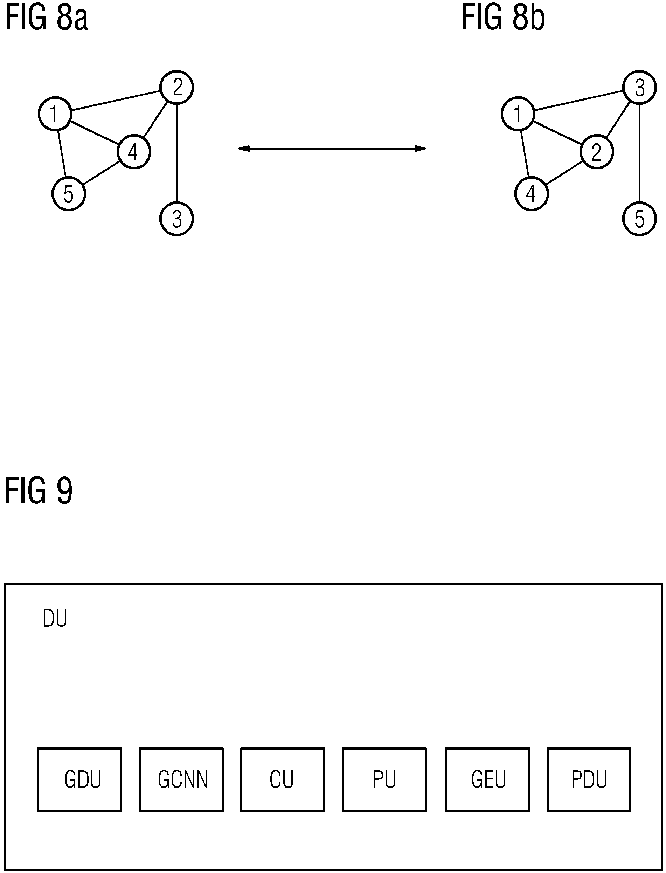

The usual representation of an engineering design is a table. The disadvantage of tables is that complex relations thus as multi relations cannot be captured. Another disadvantage is that a table, if it should be used as input data, needs always to have the same structure, e.g., the same number properties regarded which might e.g., be contained in a column. In this case the number of columns needs then to be the same. Hence, the graphical representation of the technical system, e.g., the hybrid car, is much more flexible, e.g., if the number and types of components vary, do not require an ordering which would lead to permutation variant representations (see Fig. 8) and moreover can contain the plurality of relations that exists, e.g., the electrical connection to the first electric motor motor_0 and to the second electric motor motor_1. For example, these electrical connections are different, because due to a different maximum current of the two electric motors, the current is differently limited in the two connections. Also due to a different position in the car, the cable length to the two motors differs which leads to a different capacity and inductivity which influence the current behavior over time especially in a start phase. In the graph this information can be easily captured by representing the components "electric motors" and the "properties" of their connection as nodes which are connected by edges. This will be explained further below:

In the graphical representation there are nodes, which describe components, assets and ports and which are identified by a node type. The root or central node or architecture node HV describes a specific architecture.

For a planned hybrid vehicle, various data architectures can be created so that different embodiments of the vehicle are described which differ e.g. in one or more components.

The specific hybrid vehicle HV has several components, e.g., motor 0 MO and motor 1 M1, battery 0 B0, vehicle chassis V0 and internal combustion machine ICE_0.

In Fig. 6a these components are depicted with a circle and are directly connected by an edge to the root of the graph representing the hybrid vehicle HV. Optionally, there are some components that are not varied during the current task, e.g., number of tires, axles, gearbox etc. In Fig. 6 such invariable components or "assets" are depicted with a square.

In the following invariable components or assets and components are referred to as "components".

A component has one or more ports across which a relation to other components is established, e.g., electrically, mechanically, e.g., rotationally or via the chassis, via a specific throttle of the internal combustion machine etc. These possible relations via the ports are depicted by a triangle and form again nodes in the data topology.

A port represents a facility for an e.g. mechanical or electrical interaction. Each edge represents a correlation between the two connected components, e.g., a mechanical coupling constant between two chassis parts or torque coupler between an internal combustion engine and a front or rear axle, an electromagnetic coupling between components of an electric motor.

These relations may lead via one edge from one component to another. This is depicted in Fig. 6a between motor_1 and motor 0 with one edge via their port for rotational interactions.

The components, invariable components or assets, and ports constitute nodes of a data topology centered around a root node denoting a specific architecture of the technical system, e.g., the hybrid vehicle. The nodes of the data topology are connected by edges denoting a correlation between two nodes.

This correlation can be unidirectional or bidirectional. An attribute is assigned to at least some components. This attribute can be e.g. the number of coil windings of an electric motor, the cylinder size of an internal combustion engine ICE, e.g., a motor driven by fuel.

In Fig. 6b a table with attributes F1-F4 is depicted. In each row the numerical values of these attributes for different components, e.g., electric motors are listed.

According to an example the large configuration space the engineer is working on is the combination of an internal combustion engine ICE and an electric motor for a hybrid car. The engineering specification for the hybrid car provides in a "large configuration space" of the overall design that an internal combustion engine with 3 variants having 1.5l, 2.0l and 2.4l cylinder capacity and an electric motor with 3 variants having (96kW,250Nm), (50kW,200Nm) and (33kW, 210Nm) is foreseen. For the variant specification of e.g. the component "electric motor" it is provided as property, that the number of motors or multiplicity varies between 1 and 4. It is further provided that for a specific electric motor of the electric motors 1 to 4 a port is provided for electrical interaction and another port for rotational interaction. This information is encoded in the data topology containing the nodes and edges. However, for the architecture of the hybrid vehicle also the numerical values denoting motor size and power need to be considered. These are the attributes assigned to at least some of the components.

The task of the engineer is now to find a combination of ICE and electric motor that optimizes an important indicator, a so-called key performance indicator or KPI, of the overall system, which is in this example acceleration time vs fuel consumption. This optimization can be done by using physical simulations, which however, as set out before, requires a significant amount of time.

According to the here described embodiments, by using a neural network applied on the graphical representation of the data architecture as input data the KPI as output data can be achieved immediately, i.e., requiring much less time than the simulation.

In order that this graphical representation or knowledge graph is suitable for machine learning, it must be provided with a sufficiently rich semantic representation of the design otherwise the prediction performance in a machine learning model would otherwise be very low. This is achieved by a description by a data topology as described above having nodes with type information, e.g., "battery", "motor", "electrical port" etc., links with properties and further assigning attributes, in particular numerical attributes to some nodes.

As a further example, a gearbox, which is depicted as a node in Fig. 6a has as attribute a mass of 40 kg. It has several mechanical connections, each denoted a mechanical port of the gearbox from which an edge establishes a connection to another component, e.g., the internal combustion engine ICE_0.

The gearbox may further have an electrical connection, which is not depicted in Fig. 6a, denoted by an electrical port from which an edge may establish a connection to a neighboring node.

From the architecture topology and the attributes input data for a graph convolutional network are derived. The output of the GCNN is a matrix whose dimensions depend on the number of nodes and the number of latent dimensions of the GCNN.

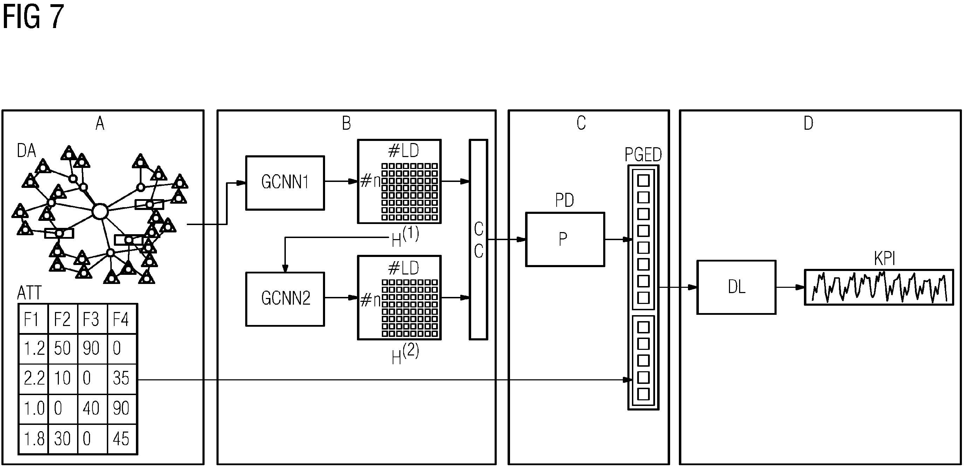

In Fig. 7 a schematic system architecture or exemplary workflow for a method deriving indicators of an exemplary hybrid vehicle architecture is shown.

In step A input data are created from the technical description of the system, which is in this example a subset of a hybrid vehicle architecture. The depicted subset focuses on the combination of electric motor and internal combustion engine ICE. The data architecture DA derived from the technical description comprises nodes with attributes ATT and edges connecting the nodes and serves as input data for step B.

A table with numerical attributes ATT is depicted at the bottom. The numeric attributes can be any continuous variables that describe some property of one or more components of the system.

In step B a representation of the nodes of the data architecture and their relations to neighbored nodes is obtained by feeding the input data in graph convolutional neural networks (GCNN).

The input data are $H^{(0)}$, which is a representation of the node features and the link structure of the data architecture described by matrix $\tilde{A}$ , e.g., an adjacency matrix, supplied to a first graph convolutional neural network GCNN1. In this first graph convolutional network features of one hop distant nodes are encoded in the representation of one node. By reiterating this process more and more distant information will be considered for a specific node. The first graph convolutional neural network GCNN1 may comprise a single convolutional layer. Alternatively, more complex operations may be possible, e.g., also including other layers, e.g., further convolutional layers or other types of layers.

The output thereof, which is a matrix $H^{(1)}$ with dimensions depending on the number of nodes #n of the data architecture DA and the number of latent dimensions #LD of the first graph convolutional neural network GCNN1 serves as input for a second graph convolutional neural network GCNN2, which is in particular different from the first graph convolutional neural network GCNN1, e.g., has been trained in a different way.

The values of matrix $H^{(1)}$ reflect first order correlations between two nodes, i.e., with one edge in between. Thus, in addition to node features, first order correlations are encoded in this matrix $H^{(1)}$. This can be important e.g. for investigation or deriving indicators for the components which are directly connected to the architecture node HV. As explained before, a first order correlation has an edge leading directly from source node to target node, a second order correlation has an edge leading from the source node via a first edge to an intermittent code and via a second edge to the target node, etc.

By using $H^{(1)}$ as input for the second graph convolutional neural network GCNN2, second order correlations between two nodes, i.e., the nodes having a node in between, thus via two edges are considered in the output $H^{(2)}$ which is a matrix with dimensions number of nodes #n* number #LD of latent dimensions of the graph convolutional neural network. $H^{(2)}$ encodes node features and information from nodes one and two hops distant from the considered node. This matrix $H^{(2)}$ can be especially important if relations between the first battery battery_0 and the first electric motor motor_0 are being investigated so that indicators for their behavior can be derived.

Experiments have shown that considering first order and second order relations, i.e., considering relations with nodes one hop or two hop away, lead to good results, i.e., the indicators derived reflect the reality very well. Depending on the data architecture, in other embodiments also higher order correlations are considered. The usefulness depends e.g. on the strength of the correlation between the nodes or the number of connections between a nodes and other nodes, because if going to higher order, more distant relations are being examined whereas information regarding the node features and from closer nodes is being smoothed out.

According to an advantageous embodiment the convolutional operator used in the GCNN is

$$H^{(l+1)} = \sigma(\widetilde{D}^{-1/2}\tilde{A}\widetilde{D}^{-1/2}H^{(l)}W^{(l)})$$

wherein H is the representation of the nodes. 1 is a running variable denoting the number of latent dimensions in the graph convolutional neural network or the convolutional layer of the graph convolutional network. For 1=0, $H^{(0)}$ represents node features, e.g., the type which might be e.g. "component" or the number and type of ports. H is iteratively updated and then represents for values 1>0 also relations between the nodes.

$\sigma$ is a sigmoid function which is used as an activation function of the GCNN.

The matrix $\tilde{D}^{-1}$ is used for normalization and can be derived from the input and a diagonal matrix.

$\tilde{A}$ is a matrix reflecting the topology of the data structure. E.g. $\tilde{A}$ is an adjacency matrix which describes the connections between one node and another node for all nodes in the graphical representation, hence it represents essentially the link structure. $W^{(l)}$ is a parameter or weight denoting the strength of a connection between units in the neural network. The advantage of this convolutional operators is its basic form. The aggregation, i.e., gathering of information relevant for one specific node, is based on mean values.

Alternatively, other convolutional operators can be used that are tailored for a specific problem, e.g., for a description of vibrations in the chassis or also for a process where gases or liquids or piece good are produced by various transformation along a production line. In some cases effects far away from one component might have a strong impact, whereas in other cases only specific elements or nearby elements have any impact. The aggregation, i.e., the "concentration" of information to one point needs to be different in these cases and hence different convolutional operators are to be used.

For the machine learning it is important that identical or isomorphic structures do not lead to different input information. The advantage of applying the proposed graph convolutional formulation is that it is permutation invariant, as long as the node features are not encoded with the node ID. This is overcome by using the node type, e.g., motor, battery, etc. Then e.g. in a matrix $H^{(0)}$, i.e., a matrix before application of a Graph Convolutional neural network, all features of e.g. node 1 would be grouped together in a column, but it would not be required e.g. that it is column 1.

As said before, from the data topology or structure a sort of adjacency matrix $\tilde{A}$ describing the link structure of the data architecture is derived and enters as input value the GCNN. When deriving a matrix from the data structure a numbering of nodes has to be introduced in order to put e.g. connections starting from node 1 to other nodes in row 1 and connections leading to node 1 in column 1 and so forth for columns 2, 3, 4 and 5. If the numbering would be changed, the result would be a different representation, i.e., a different matrix. In other words, by permutations different matrixes are obtained which describe the same data structure. This fact hampers the machine learning process, because all the possible permutations which can be a high number would have to be used as training data. Therefore, permutation invariant representation of the data structure is used.

To obtain such a permutation invariant representation of the data structure, the attributes of each node are used. By adding the attributes to individual nodes, they are made different from each other so that they are not exchangeable anymore. Then, for two isomorphic designs, even if the node orderings are different, the machine learning model recognizes the designs as identical since the graph convolutions are designed to be permutation invariant.

In Fig. 8a and 8b two node structures are depicted. As said, if such a node structure is represented by a matrix, an ordering has to be given to the nodes, e.g., each node is given a number. The node structures shown in Fig. 8a and 8b are isomorphic, i.e., unambiguously reversible, just the nodes are numbered differently. By adding the attributes, a structure as shown in Fig. 8a and 8b is not any more represented by the same matrix as the structure in Fig. 8b, because the nodes are not interchangeable anymore, e.g., node 5 is not the same as node 3, because it has e.g. different features, e.g., node type, attributes, ports etc.

Returning to Fig. 7, the node representations $H^{(1)}$ and $H^{(2)}$ thus represent the structural identity of each node by encoding adjacency information. The node representations $H^{(1)}$ and $H^{(2)}$ are concatenated CC and thus concatenated data are obtained. For example the two matrices $H^{(1)}$ and $H^{(2)}$ are stacked, the concatenated data is then a matrix having the number of columns of $H^{(1)}$ plus the number of columns of $H^{(2)}$. So, the concatenated data's dimension depends on the original number of nodes in the data architecture, the number of latent dimensions of the first graph neural network GCNN1 and the number of dimensions of the second graph neural network GCNN2, and up to which order correlations are considered, i.e., how many matrixes $H^{(1)}$ are appended. Using the combined data in step C a summarizing takes place.

For further processing it is advantageous that the number of dimensions is not too high and/or that the number of dimensions has a predefined value.

In order to shrink the number of dimensions, e.g., to a predefined size, a pooling P is applied on the data. Thus, by the pooling P the node representations for a variable number of nodes are compressed, in particular to a predefined size that can be processed further. Thus, an independence of the number of input nodes, which may vary, is achieved. A further advantage of the pooling is that a focus can be made on encoded information that is of particular interest and which might- due to encoding also information of distant nodes otherwise be disregarded.

An advantageous pooling algorithm is to consider only maximum entries in a certain area, e.g., a row or line or sub-matrix, i.e., a matrix having lower dimension than the complete matrix, e.g., a 2x2 matrix out of a 16x16 matrix. This allows to focus on the most prominent values which often have the largest influence on relations between components.

According to an embodiment a pooling algorithm is used that

$$r_i = max_{n=1}^{N_i} x_n$$

Where x is a vector of the concatenated data matrix and r is the representation resulting from the pooling P, which is referred to in Fig. 7 as pooled data PD. i is the number of dimensions pooled data PD can assume. $N_i$ is the number of rows of the concatenated data. Thus, by the pooled data PD a representation is obtained that is independent of the original number of nodes, which depends on the technical system to be investigated and on what or which indicator in the technical system is of interest.

In this embodiment a maximum pooling considering only the maximum value is done. Alternatively, other pooling methods such as taking a mean value or the sum of the regarded entries can be taken.

The pooled data PD are combined, e.g., concatenated, with the numerical attributes ATT, thus obtaining the pooled graph encoded data PGED, which are according to an advantageous embodiment represented as a vector, which can be regarded as vector representation of a specific design.

Thus, the pooled graph encoded data encode the data architecture DA contained in the graph up to the desired order correlations and the attributes assigned to nodes.

Combining numerical attributes ATT of the nodes at this stage lead according to experiments to a better approximation of the indicators.

The pooled data PD cannot be directly interpreted, i.e., do not show directly e.g. a physical or technical or chemical meaning. What is done in step D is to extract a useful indicator from the pooled graph encoded data PGED which comprise these pooled data PD. Therefore, the multi-dimensional encoded information is transformed to e.g. a continuous numeric output or vector, w. For this a so called "dense layer" is used which can be regarded as a "feed forward neural network" or multilayer perceptron.

In step D the pooled graph encoded data PGED are used as input for dense layers DL. The dense layer can be realized by a multilayer perceptron and reduces the number of dimension of the pooled graph encoded data PGED such that a vector denoting the searched indicator KPI is achieved.

According to advantageous embodiment for the dense layers the following activation function is used:

$$y = Relu\left(X_{pool} \cdot W_h\right) \cdot W_{out}$$

wherein y is the output of the dense layers, hence the sought for indicator, e.g., the acceleration versus fuel consummation. $X_{pool}$ is the graph encoded pooled data PGED.

$W_h$ is the weight of layer h or in other words the set of parameters or weights of the connections or edges used in a hidden layer of a neural network for the edges from one layer to the node of another layer. An entry of this vector can be the weight of an edge leading from a node in layer h to another node in a different layer. W

$W_{out}$ is the weight of the output layer, i.e., describes the weights of the edges leading from the last hidden layer to the output layer $W_{out}$ and $W_{in}$ are both learned in the machine learning process.

Relu (rectified linear unit) is an activation function for the dense layers, which is used in an embodiment and performs well for the described example where indicators KPI are derived for a hybrid car architecture or another technical system such as transmission unit or a flying object, e.g., a quadrucopter.

This neural network comprising at least one convolutional layer, optionally a pooling layer and a dense layer is trained with data generated in a simulation environment or obtained from real experiments.

The simulation environment is advantageous to generate sufficient training data to train the neural network. Training data can be created by generating a large number (1000s) of designs randomly sampled from the design space. These designs need to be simulated by the simulation environment in order to identify the relevant KPIs. This set of designs and corresponding KPIs then forms the basis for the training set that is used to train the neural network. Assuming there is some form of smoothness, regularity or structure in the design space, the neural network is able to generalize to unseen designs and approximate their KPIs well, i.e., the machine learning applies an inductive learning algorithm on the graph structured data. This is an advantage in comparison to most algorithms which function only transductively.

Once the neural network is trained, the simulation environment is no longer necessary as the neural network can provide predictions without it. Thus, once the neural network is trained with these simulation data, new data can be obtained in much less time than the simulation requires.

The described neural network may can be one single neural network with at least one graph convolutional neural network, one or more pooling layers and dense layers. Alternatively, an architecture of several neural networks is used, comprising a graph neural network with a convolutional layer, at least a second graph neural network, a neural network containing a pooling layer and a multilayer perceptron as dense layer.

In Fig. 9 an embodiment of an apparatus is shown by which the described method can be performed: The determination unit DU is used for determining an indicator describing a performance of at least some components of the technical system HV describing the hybrid car.

In a graphical description unit GDU a data architecture graph of a technical system HV is obtained. As described before, the data architecture graph has nodes connected by edges, said nodes representing components or group of components, or properties of components or group of components of the technical system.

The edges represent relations between components or properties of components of the technical system. Further, there is a simulation Unit GCNN for computing by use of a graphic convolutional neural network encoded data from the data architecture graph. For the encoded data relations between directly neighbored nodes are encoded and by re-iteration further encoded data encoding relations between not directly neighbored nodes are obtained.

In a concatenation unit CU for encoded and further encoded data are concatenated. A pooling unit PU is used for compressing the obtained concatenated representation preferably to a predefined size. In a graph encoding unit GEU the compressed concatenated representation is combined with at least one numerical attribute. In the prediction Unit PDU the representation from the graph encoding unit GEU is transformed to the indicator by using a dense layer DL neural network.

A construction system for the construction of a complex system such as a car or a production line may comprise one or more such determination units DU or apply a method as described in relation with Fig. 7.

A representation of complex systems by knowledge graphs and attributes has been described above in the description of **Fig. 6a** (representation of a complex system by a graph) and **Fig. 6b** (numerical attributes).

In view of the diversity of complex system types, a standard tabular representation which is used in machine learning according to the prior art, does not provide the necessary flexibility to capture all the nuances of the problem domain. For this reason, according to the following embodiments, it is proposed to model all systems as a knowledge graph composed of entities and relations.

To translate the complex system designs into a knowledge graph, an ontology, i.e., a standardized language that describes elements of complex systems and relationships between the elements, is advantageously used. E.g., by describing all motors, electrical components, hardware interfaces using a common language, the machine learning solution can learn to leverage the commonalities between differing system types and more efficiently find performant machine learning models as will be set out below with regard to the remaining figures.

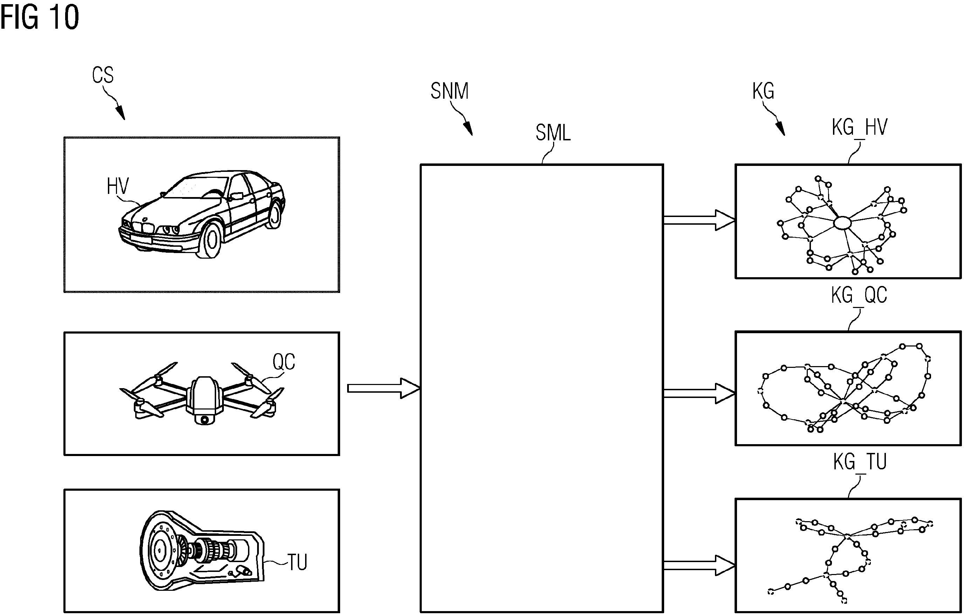

With regard to **Fig. 10** it is explained how from a complex system CS a knowledge graph KG is produced. Descriptions of complex systems CS are translated into knowledge graphs KG using a standardized modelling language. On the left are representations of a particular design for three different complex systems CS.

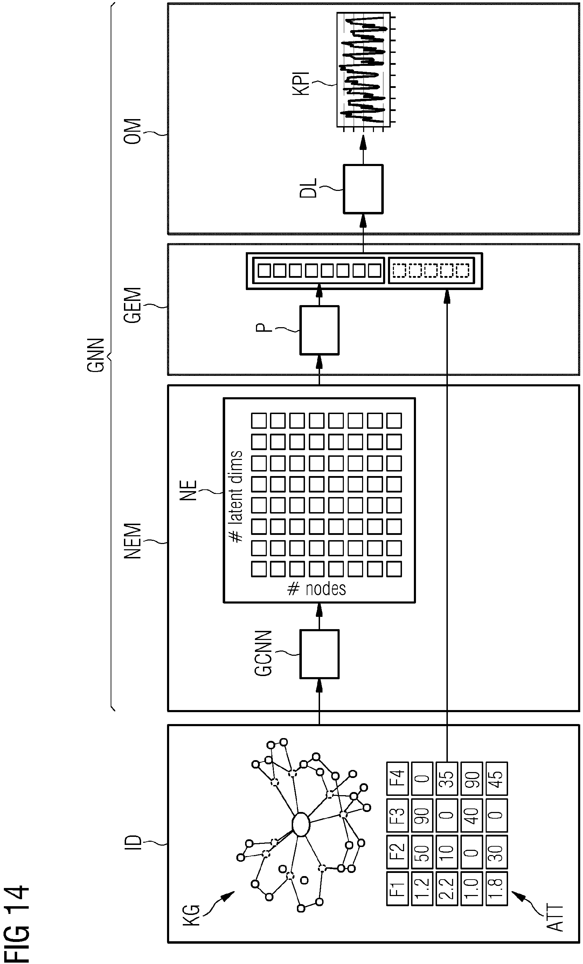

A system design SD is then composed of a knowledge graph KG and optionally attributes ATT, which serves as input data ID for the graph neural network architecture GNN, see Fig. 14.

A system design SD can result from actual systems in the real world or from simulated data. For a variety of systems as used for training the agent systems designs from the real world, simulated system designs or/and combinations thereof can be used. According to an advantageous embodiment also for an individual system design SD part of the underlying information is taken from actual measurements and other parts from simulations.

According to an advantageous embodiment, there is at least one group of attributes ATT which refers to a subset of the nodes, e.g., a motor property refers only to nodes related to the motor. Alternatively or additionally, there is a first group of attributes which refers to a first subset of nodes and a second group of attributes which refer to a second subset of nodes etc.

According to an advantageous embodiment the attributes ATT are combined with graph encoded data only after the graph encoding. Thus, for attributes ATT not relating to all nodes, these can be adequately considered. Using them already for the node encoding would it make necessary to set the value of the attributes e.g. to 0, but as 0 could have the meaning "non applicable" or "value is zero" this would lead to ambiguities or sparsity issues when doing the node encoding.

The shown system type on the top is a hybrid vehicle HV with its electric and fuel driven power train, in the middle there is a quadrucopter QC with its 4 rotors, and on bottom there is a transmission unit TU.

These are only exemplary systems, the system could be as well a manufacturing unit, a robot, a chemical substance or molecule, a computer system, a smart energy system in a house etc.

The data relating to these complex systems CS are used as input data for a standardized network model SNM at the center of Fig. 10 which uses a standardized modelling language SML to describe the respective complex system CS with its components and their relationships.

As output data the knowledge graphs KG on the right are produced, on top the knowledge graph for the hybrid vehicle KG_HV, at the center the knowledge graph KG_QC for the quadrucopter QC and at the bottom the knowledge graph KG_TU for the transmission unit TU. These represent the system design on the left using a standardized modeling language SML for the elements of the design and their relations. These elements can be e.g., motor types, electrical components, hardware interfaces etc.

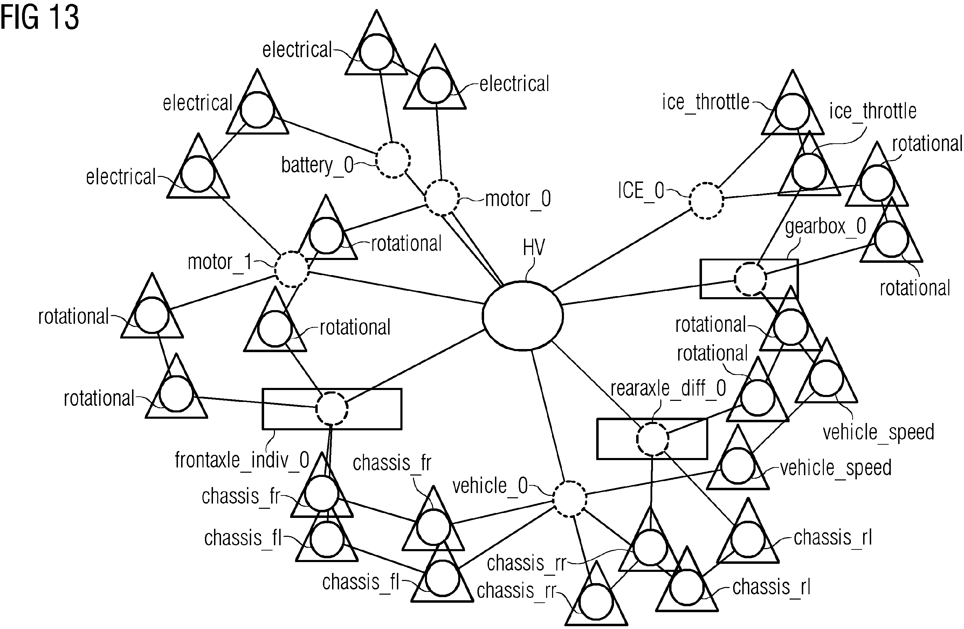

A knowledge graph KG depicts nodes and edges between the nodes, the edges can be unidirectional or bidirectional. A node may represent an element and an edge a relation between elements. This will be further explained in relation with Fig. 13.

By a knowledge graph KG the data structure of the complex system CS is described. The data structure is a formal representation of the engineering specification, which may be provided by a customer, e.g., a car manufacturer who needs in return a description of a specific design for producing prototypes, real car components, cars etc. This multi-relational engineering specification comprises heterogenous information about components, component properties and how and which of the components are related. From this specification, nodes and further information describing the nodes, e.g., a type of the node or an attribute of the node and the edges, i.e., connections between source and target nodes, can be extracted, e.g., by using graph regressors, and form the knowledge graph, which serves as input data for a graph neuronal network GNN, e.g., a graph convolutional neural network.

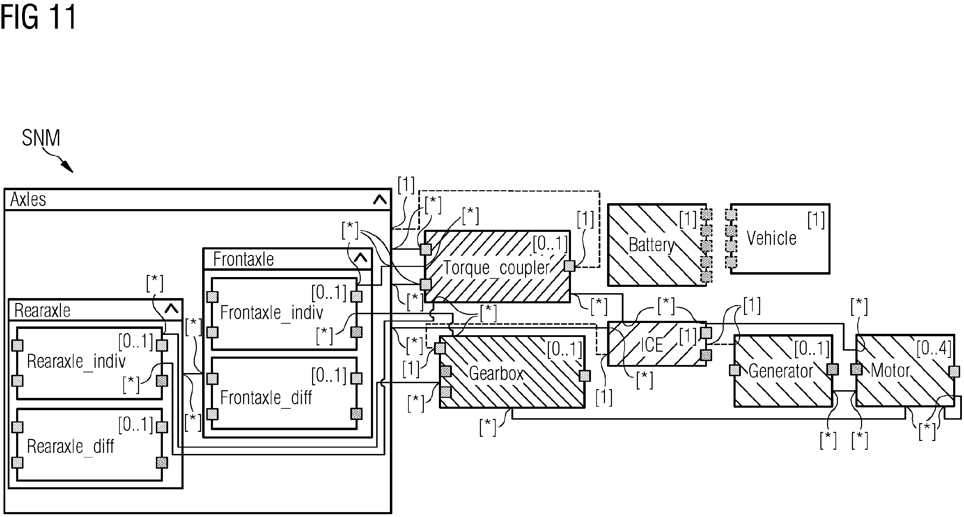

**Fig 11** depicts the standardized network model SNM (center of Fig. 10), in which the system design of the complex system CS is described using a standardized modeling language SML in more detail.

In **Fig. 11,** as an example, direct relations between the axles with other components of the vehicle such as gearbox, torque coupler are shown as well as indirect relations, i.e., relations via another component to the motor or generators. The squared units at the edges of the components denote a possible way of relation, e.g., electrically or mechanically.

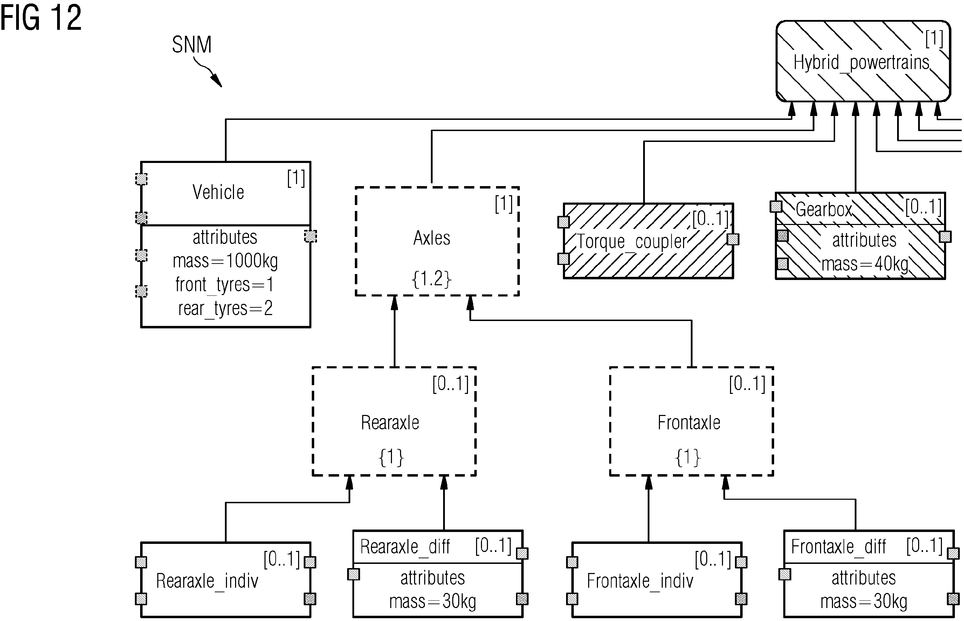

In **Fig. 12** attributes of some of the components of **Fig. 11** are shown as rectangular boxes. These attributes denote numerical values of a component, such as the number of front or rear tires in the component "vehicle", the mass or the number of axles. In the shown example all of the components have attributes.

These relationships and attributes are used when translating or encoding the description of the complex system CS into a knowledge graph KG.

Knowledge graphs KG have, e.g., the following advantage: The usual representation of an engineering design is a table. The disadvantage of tables is that complex relations thus as multi-relations cannot be captured. Another disadvantage is that a table, if it should be used as input data, needs always to have the same structure, e.g., the same number properties, e.g., that the number describes the number of axles needs e.g., to be contained in a column. In this case the number of columns needs then to be the same.

Hence, the graphical representation of the technical system, e.g., the hybrid car, is much more flexible, e.g., if the number and types of components vary, do not require an ordering which would lead to permutation variant representations and moreover can contain the plurality of relations that exists.

Further details have been described above with relation to Fig. 8a and 8b.

In **Fig. 13** the knowledge graph of the exemplary hybrid vehicle HV in Fig. 10 top on the right side is shown.

In the graphical representation there are nodes, which describe components, assets and ports and which are identified by a node type. The root or central node or architecture node HV describes a specific architecture.

For a planned hybrid vehicle HV, various data architectures can be created so that different embodiments of the vehicle are described which differ e.g. in one or more components.

The specific hybrid vehicle HV has several components, e.g., motor 0 MO and motor 1 M1, battery 0 B0, vehicle chassis V0 and internal combustion machine ICE_0.

In **Fig. 13** these components are depicted with a circle and are directly connected by an edge to the root of the graph representing the hybrid vehicle HV. Optionally, there are some components that are not varied during the current task, e.g., number of tires, axles, gearbox etc. In Fig. 13 such invariable components or "assets" are depicted with a square.

In the following invariable components or assets and components are referred to as "components".

A component has one or more ports across which a relation to other components is established, e.g., electrically, mechanically, e.g., rotationally or via the chassis, via a specific throttle of the internal combustion machine etc. These possible relations via the ports are depicted by a triangle and form again nodes in the data topology.

A port represents a facility for an, e.g., mechanical or electrical interaction. Each edge represents a correlation between the two connected components, e.g., a mechanical coupling constant between two chassis parts or torque coupler between an internal combustion engine and a front or rear axle, an electromagnetic coupling between components of an electric motor.

These relations may lead via one edge from one component to another. This is depicted in Fig. 13 between motor_1 and motor_0 with one edge via their port for rotational interactions.

The components, invariable components or assets, and ports constitute nodes of a data topology centered around a root node denoting a specific architecture of the technical system, e.g., the hybrid vehicle. The nodes of the data topology are connected by edges denoting a correlation between two nodes. This correlation can be unidirectional or bidirectional.

**Application of Graph Neural Network for Performance predictions in complex systems described by knowledge graphs (Fig. 14)**

Based on the knowledge graphs KG, performance predictions should be made using a suitable graph neural network architecture.

It is an object of the embodiment to obtain such a suitable neural network architecture by using a machine learning method.

In **Fig. 14** a high-level description of the elements used for designing a suitable network architecture, which is capable of predicting a performance characteristic of a complex system, is shown. This design is done by machine learning and results in a suitable graph neural network GNN architecture.

The shown suitable graph neural network GNN architecture for describing a complex system CS is advantageously comprised of a node encoding module NEM, into which the input data ID are fed.

The input data ID is the knowledge graph KG. Optionally the knowledge graph KG contains attributes ATT to individual nodes. By knowledge graph KG and optionally the attributes ATT a specific system design of a complex system can be described.

**NEM (Node Encoding Module)**

Data obtained from the node encoding module NEM are fed into a graph encoding module GEM. The thus processed data then enter an output module OM.

The data obtained from the node encoding module NEM (NEM data) represent "low level" features, i.e., features or properties solely referring to a specific node. In other words, everything relevant for the identity of a specific node in the given complex system is contained. For example, the NEM data may represent a motor with its weight, electrical or mechanical connection possibilities. In the example of the quadrucopter QC, e.g., it may further represent rotational speed and direction, bus ports. In the example of a transmission unit TU further connections to gearset, brake or clutch may be considered. In other words, the intermediate graph neural network GNN learns vector representations for all nodes which capture the structural identity of each node (e.g., motors, batteries etc.) by encoding adjacency information.

In another example of industrial automation, it may represent a specific robot in a production line and its properties. In another example of material science, it may describe properties of an individual molecule.

**GEM (Graph Encoding Module)**

The data obtained from the graph encoding module GEM are referred to as GEM data and represent information on the overall system, e.g., the effect of connections between various nodes.

In the example of the hybrid vehicle HV it may represent oscillations that travel over the whole vehicle due to the various masses of the components motor, battery and the couplings strengths, e.g., stiffnesses, of the relevant connections. In the example of the quadrucopter QC it may represent the interaction between the four motors and the shape of the wings, so that e.g. impacts on the direction it moves can be deduced.

In another example of industrial automation, it may represent the impact a robot at the entry of the production line may have on a further processing device somewhere else in the production line. In another example of material science, it may represent a property of a substance composed of various molecules as a whole (and not of single molecules), e.g., its viscosity.

In the shown example of graph encoding module GEM a Pooling P and a combination of these data and attributes ATT takes place.

**OM (Output Module)**

As said, the data obtained from the graph encoding module may be optionally pooled. The data cannot be directly interpreted, i.e., do not show directly e.g.

a physical or technical or chemical meaning. What is done in the output module OM is to extract a useful indicator from the graph encoded data, which are optionally pooled. Therefore, the multi-dimensional encoded information is transformed to e.g. a continuous numeric output or vector, w. For this advantageously a so called "dense layer" is used which can be regarded as a "feed forward neural network" or multilayer perceptron.

In the output module OM the graph encoded data, which are optionally pooled, as shown in Pooling P, are transformed such that the dimension is reduced. E.g. they are used as input for dense layers DL. The dense layers DL can be realized by a multilayer perceptron and reduces the number of dimensions of the (optionally pooled) graph encoded data such that a vector denoting the searched indicator KPI is achieved.

According to advantageous embodiment pooling has been done and for the dense layers DL the activation function is used that was described with regard to Fig. 7.

For each of node encoding module NEM, graph encoding module GEM, and output module OM exist many possible options, i.e., different realisations.

**Variations in the Node Encoding Module of a Graph Neural Network**

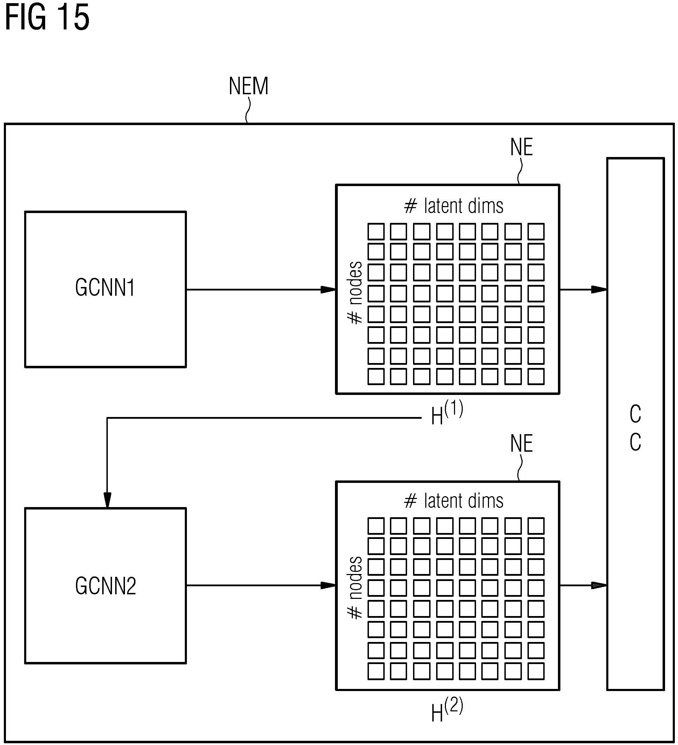

As an example, the node encoding module NEM may also be comprised of several graph convolutional neural networks GCNN applied one on the output of the previous GCNN as depicted in **Fig. 15** with a first graph convolutional neural network GCNN1 and a second graph convolutional neural network GCNN2. The described model learns vector representations for all nodes which capture the structural identity of each node (e.g., motors, batteries etc.) by encoding adjacency information.

Additionally or optionally, the node encodings NE emerging from the respective GCNN, i.e., first graph convolutional neural network GCNN1 and second graph convolutional neural network GCNN2, can be concatenated CC in a predefined manner. According to an advantageous embodiment by the concatenation the focus is set differently for different nodes. This is done in that for nodes at the edges of a layer $2^{nd}$ order or higher orders are considered, whereas for nodes at the centre only first order relations are considered or vice versa. By the concatenation then neighbored nodes can be considered differently for individual nodes.

Further exemplary node encoding module options are:

- Standard graph convolution where the convolutional operator is used as was described with regard to Fig. 7. Alternatively, other convolutional operators can be used that are tailored for a specific problem, e.g., for a description of vibrations in the chassis or also for a process where gases or liquids or piece good are produced by various transformation along a production line.

- Graph convolution with attention mechanism: Generally spoken for the network architecture graph convolution layers are stacked, i.e., there are several hidden layers, i.e., layers between input and output layer. Specific nodes in these stacked layers, e.g., nodes of one layer, can attend features of neighboured nodes, e.g., in the same or in different layers. This has the effect, that different weights to different nodes in a neighborhood can be assigned, without requiring any complex calculations, e.g., matrix operations such as inversion or further knowledge on the graph structure.

- Self loops or concatenation: As shown in Fig. 15 several graph convolutional neural networks may be used and the output thereof may be concatenated in a prescribed way. Alternatively, instead of or additionally to using more than one graph convolutional neural network, also the output of a graph convolutional neural network may again be fed into the same graph convolutional neural network, i.e., self-looped, and then concatenated.

- Aggregation function (sum, mean, max): By aggregation the gathering of information relevant for one specific node is meant, see above. This may be based on mean values, sums of values or by taking the maximum values.

- Number of layers: The number of hidden layers may be varied depending on the specific problem. According to an advantageous example, it would be started with one layer, many problems can be modelled using two hidden layers.

- Dropout layers: Dropout works by randomly setting the neurons of a hidden layers to 0 during training. This prevents neurons from co-adapting too much and thus over-fitting the model, i.e., describing it with more independent variables than actually needed. This is described in more detail by Srivastava et al. in the article "Dropout: A Simple Way to Prevent Neural Networks from Over-fitting" which is published in Journal of Machine Learning Research 15 (2014), 1929-1958.

- Jumping knowledge layers: This addresses the problem that the range of "neighboring" nodes that a node's representation draws from strongly depends on the graph structure. To adapt to local neighborhood properties and tasks, by jumping knowledge layers, for each node, different neighborhood ranges can be flexibly set to enable better representation of the complex system.

**Variations of the Graph Encoding Module in Graph Neural Networks**

With respect to the graph encoding module for the example shown in **Fig. 14** the pooling P can advantageously done as max-pooling, i.e., considering only the strongest values. Alternatively, pooling P can be done that only values close to a mean value are considered etc., see below. Also, with regard to the combination of data, various combination schemes between attributes ATT and results of the pooling can be applied. According to the shown example the data that are output from the pooling P are just concatenated with the attributes.

Exemplary graph encoding module GEM options are:

- Simple pooling (sum, mean, max): By applying pooling P on the data, the dimension of the data is reduced. Thus, by the pooling P the node representations for a variable number of nodes are compressed, in particular to a predefined size that can be processed further. Thus, an independence of the number of input nodes, which may vary, is achieved. A further advantage of the pooling is that a focus can be made on encoded information that is of particular interest and which might- due to encoding also information of distant nodes otherwise be disregarded.

As said, an advantageous pooling algorithm is to consider only maximum entries in a certain area, e.g., a row or line or sub-matrix, i.e., a matrix having lower dimension than the complete matrix, e.g., a 2x2 matrix out of a 16x16 matrix. This allows to focus on the most prominent values which often have the largest influence on relations between components.

According to an embodiment the pooling algorithm is used that was described with regard to Fig. 7. As was said, alternatively, other pooling methods such as taking a mean value or the sum of the regarded entries can be taken.

- Hierarchical pooling, wherein the pooling is performed according to a defined relation, e.g., on the amount of information a node gives to a neighbour.
- Attention based pooling: Therefore, attention weights are introduced for individual nodes in order to keep the most relevant information when pooling is performed.

**Variations of the Training in Graph Neural Networks**

The result of the training should be a neural network architecture that sufficiently good describes the relevant portions of the complex system CS so that the desired predictions can be made.

As an example, for the training of a graph neural network GNN that models a new car, e.g., hybrid car, available data sets from previous hybrid cars are taken.

The data sets may be obtained from measurements or simulations. For a training a predefined first sub-set of the data set may be taken. To decide on the successful completion of the training a second sub-set of the data set, which has not been used for the training is taken. It is then investigated whether the graph neural network can predict also the indicators of the second sub-set correctly.

For the training there are training specific parameters, which need to be specified, which are e.g.:

- Batch size: The batch size is a hyperparameter that controls the number of training samples before the model's internal parameters are updated, i.e., before the intermediate graph neural network is modified.

- Learning rate: The learning rate controls how quickly the graph neural network is adapted to the specific system design. If the learning rate is small, then there are only small changes and more training epochs are required. Larger learning rates effect rapid changes and require therefore fewer training epochs.

- Stopping criteria: It has to be decided, when the training of a neural network is stopped. What is advantageously used as stopping criterion is the following: The available training data are separated in different sets, at least one set for the training and a disjunct validation set for the testing how good the predictions made by the created intermediate graph neural network are. With ongoing training one will experience an increase in the quality of predictions made for the validation until a certain point, when a decrease in the quality will start, meaning that the training data set is overfitted. This point can be used as stopping criterion.

- Number of epochs: Is a hyperparameter, that controls the number of complete passes through the training data set. For example, it is assumed that there are 1000 samples (i.e. 1000 lines of training data samples), the batch size is 5 and there are 500 epochs. Then the data set is divided in 1000/5 = 200 batches, and the model will be updated 200 times. As there are 500 epochs, the intermediate graph neural network will go through the whole data set of 1000 samples 500 times. This results in a total of 1000*500 batches = 500.000 batches during the entire training process.

**Variations of the Output Module in Graph Neural Networks**

With regard to the output module there are, e.g., the options:

- Number of layers of the output model

- Dropout layers (see above)
- Number of hidden units, i.e., neurons per layer

To determine the ideal graph neural network GNN architecture, according to one aspect of the embodiment is proposed to train a reinforcement learning agent to choose among the possible options.

By "ideal" a graph neural network architecture is meant which achieves prediction results for the specified problem lying within the specified boundaries, e.g., accuracy, training time etc.

Since the number of possible options for node encoding, graph encoding and output module is extremely large, searching over all possibilities how the GNN architecture is modified is practically infeasible. Random search will also lead to inadequate results as it is not informed by any of the commonalities between system types and would spend lots of time exploring architectures that perform poorly. By applying the concept of the embodiment, these problems can be overcome.

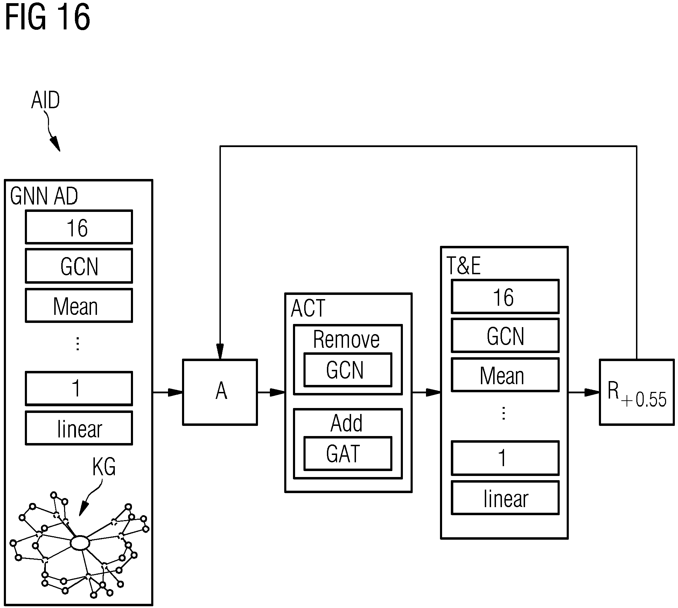

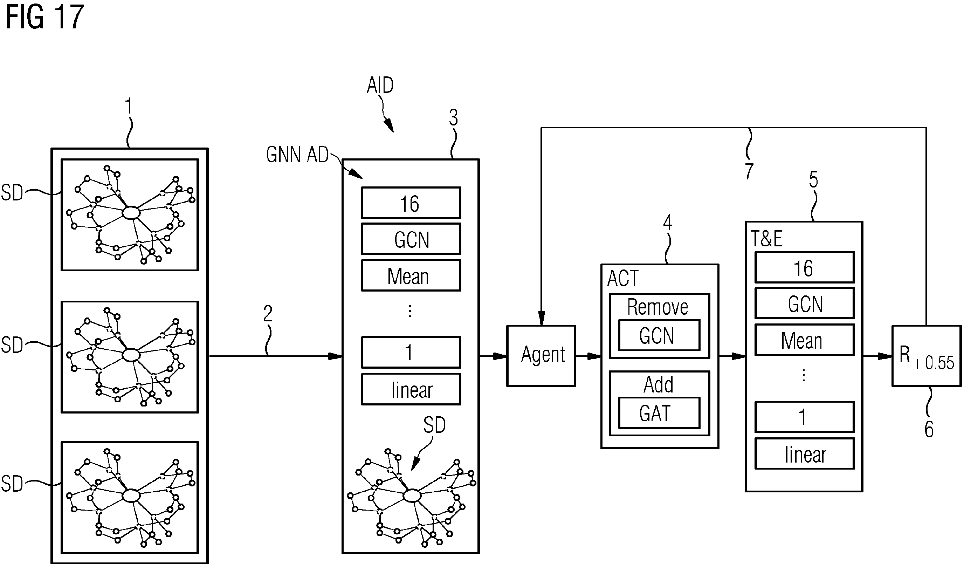

**Reinforcement Learning of the Agent (Fig. 16 and 17)**

For this reason, according to one aspect of the embodiment, reinforcement learning is used to train the agent. In this process a reward signal provides feedback, whether an actual modification was useful for modeling a specific complex system CS. In other words, the modifications are conditioned on the properties of the complex system so that it can more efficiently and thoroughly explore highly performant architectures.

The procedure of how the agent A learns a policy is detailed in **Fig. 16,** where it is shown for one specific system design which is entered as agent input data AID. Once the agent is trained, the process shown in Fig. 16 is applied to unknown system designs and the agent applies the learnt policy, e.g., changes the network architecture in step ACT in an advantageous way.

In Fig. 16, the agent A receives as agent input data AID a description GNN AD of a start GNN architecture and the system description of the complex system CS as knowledge graph KG. These agent input data are taken out of a variety of start GNN architecture and a variety of system descriptions, see Fig. 17. Alternatively, the agent A starts with a fixed start GNN architecture, e.g., a very simple one.

"Agent" A denotes a computer program which is able to act autonomously within a well-defined range. The agent A in the context of the embodiment may decide on the various options with regard to node encoding module NEM, graph encoding module GEM and output module OM and training parameters, as set out above. Advantageously it may further decide on a starting architecture by consulting previously solved problems instead of using a predefined starting graph neural network. It may also decide on when an architecture is good enough, e.g., that the predictions are within the desired range. This range may be preset or defined while working on the problem depending on e.g. the work progress.

The agent A has a "policy" which will be explained further below. The policy determines how it should modify the GNN architecture to try and improve prediction performance. According to this policy, the agent A performs actions ACT on the GNN architecture. The exemplary actions ACT shown in Fig. 16 are to remove a graph convolutional layer GCN and instead add a graph attention layer GAT.

In a training and evaluation step T&E, the new GNN architecture is trained with training data for the specific complex system CS provided to the agent A and prediction performance for this complex system CS is calculated. In the shown example, the change the agent made has improved performance and therefore receives a positive reward R.

The reinforcement learning agent A generates a string that represents a GNN (graph neural network) architecture. For example, the string "16 GAT mean dropout 32 GAT mean" for the node encoder represents an architecture with two graph convolutional layer with attention using mean aggregation and a drop out layer in between. The output dimension of the first layer is 16 and the second is 32. The numbers 1 in the second last box from bottom and 16 in the top box mean the dimensionality of the particular neural network NN layer. Linear means that in the respective layer a "linear transformation" takes place, i.e., a matrix multiplication without nonlinear activation function.

For each GNN architecture the agent A produces, the prediction performance of the GNN architecture is computed.

By prediction performance is meant how well the indicators, e.g., key performance indicators, of a complex system CS of interest can be predicted with relation to actual data, i.e., data gained from a real-world complex system such as a hybrid car. Alternatively to actual data, also data obtained from a simulation can be taken as reference value.

As an example, the prediction performance may be a difference between actual or simulation data and data produced by the current GNN architecture or any other sort of error function that indicates the strength of the deviation.

The reward for the agent A is defined as the performance improvement gained by modifying the GNN architecture. Positive rewards if the performance is improving and negative if the performance is decreasing. In the shown example in Fig. 16, the reward is positive because the performance has improved, i.e., the new intermediate graph neural network architecture can better model the actual system design.

Performance as a reward is not limited to the actual learning task performance, but could e.g., also take into account the memory-footprint or the training time of the GNN architecture.

For example, the reward may be the difference between a previous error function from a previous GNN architecture and the current architecture.

According to another example, alternatively or additionally to that difference the training time of the respective GNN architecture may enter the reward function, e.g., (current error function *(training time current system/average training time)-previous error function (training time previous system/average training time).

As said above, the agent A is according to an embodiment provided with an initial baseline or starting GNN architecture as part of the agent's A input data AID and then produces actions ACT based on a learned policy to iteratively modify the elements of the GNN architecture.

By learned policy is meant that in the course of setting up intermediate GNN architectures the agent has discovered which combinations of the options in the different modules meet best a specific problem or system design described by the knowledge graph KG of the complex system and hence result in an improvement of prediction performance and consequently positive reward. The agent may then fall back on the experiences made with previous GNN architectures.

This training process which results in the agent's policy, and which has also been explained with regard to Fig. 16, is also depicted in **Fig. 17.**

In a first step 1, a set of different system designs is provided as part of the agent's A input data AID.

In a second step 2, the agent samples, i.e., takes, one system design at a time, which is fully or partly described by a knowledge graph KG and optionally a start GNN architecture.

Advantageously the system designs refer to a similar technical area, e.g., vehicles with a similar drive/propulsion unit if e.g. the desired indicators are in the context of the drive/propulsion function. One advantage is that the system designs SD comprising knowledge graphs KG and optionally the attributes ATT, which may apply only for individual nodes, e.g., motor properties, can be derived not only from real world data but also from simulation data. By the reliant transfer learning of the agent thus costly real-world experiments can be reduced.

In a third step 3 the agent starts the design process for the GNN from the start GNN architecture and the sampled system design.

Then the following loop is performed: In a fourth step 4 the agent performs actions which alter the basic or start GNN architecture.

The thus obtained intermediate GNN architecture is in step 5 trained and the predicted indicators for the sampled system design achieved with this intermediate GNN architecture are evaluated with respect to the actual, e.g., measured, values of this or these indicator(s).

Depending on the amount of improvement in this cycle or loop, i.e., how much better the predictions were with this intermediate GNN architecture in comparison to the previous GNN architecture obtained in the previous cycle, a reward function is calculated in step 6.

Then, at least one iteration takes place until an intermediate GNN architecture is obtained, that meets predefined requirements such as prediction accuracy of the indicators or required length of the training.

In order that the agent A acquires a policy this process repeated for all or a subset of the system designs.

After having acquired a policy the agent A can provide for an unseen system design USD, i.e., a system that has not been part of its training, an output GNN architecture that can sufficiently well model the unseen system design USD, i.e., make appropriate predictions for indicators.

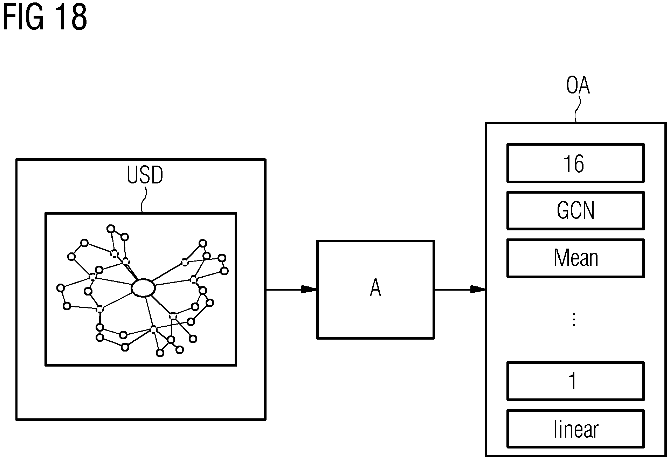

Then the intermediate GNN architecture becomes the output architecture. This result is depicted in Fig. 18, where the agent provides for a system design the suitable output GNN architecture OA.

**TRAINING**

The agent is thus trained to generalize to different types of systems described in the standardized data model. This is done by randomly sampling a system for each episode the RL agent is trained.

After each iteration, the GNN architecture is trained, performance is evaluated, and a reward is provided, **see Fig. 17.** The agent is able to observe the current state of the GNN architecture, and also the graph representation of the complex system, **see Fig. 17.**) Since the complex systems are all described using the same standardized ontology, the agent's policy can more easily generalize between the different system types. This leads to faster convergence to highly performant GNN architectures.

This process is usually carried out many thousands of iterations to train the agent to make good decisions about how to modify the GNN architecture such that prediction performance for a wide variety of system types improves.

As a result, the agent A provides a GNN architecture that should be "near" optimal architecture output with regard a system design, that has not been trained. In other words, the policy learnt allows the agent to provide GNN architectures for unseen systems and thus transfers what was learnt during the training of the agent when receiving unseen system input USD, see **Fig. 18.**

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1. A computer implemented method for automated support of a design of a technical system, comprising the following operations, wherein the operations are performed by modules, and wherein the modules are software modules executed by one or more processors and/or hardware modules:

  - receiving (OP5), by a machine learning model (MLM), a current partial design (CPD) of a technical system and a candidate component (CC) for a next design step of designing the technical system,
  - computing (OP6), by the machine learning model (MLM),

    - a probability distribution (KPI-PD), which is a probability distribution over changes of a design key performance indicator (D-KPI) if the candidate component (CC) is added to the current partial design (CPD), with the design key performance indicator (D-KPI) describing a property of the technical system, and/or
    - a predicted impact value (PIV) predicting an absolute value of the design key performance indicator (D-KPI) or a change of the design key performance indicator (D-KPI) if the candidate component (CC) is added to the current partial design (CPD), and

- outputting (OP7), by the machine learning model (MLM) and/or a user interface (UI), the probability distribution (KPI-PD) and/or the predicted impact value (PIV).

2. The method according to claim 1, wherein

- the current partial design (CPD) is a graph-based representation, and
- the machine learning model (MLM) is graph-based.

3. The method according to any of the preceding claims, wherein the machine learning model (MLM) contains

- at least one graph neural network,
- at least one graph convolutional neural network, and/or
- at least one Bayesian neural network.

4. The method according to any of the preceding claims,

- wherein the machine learning model (MLM) computes individual probability distributions (KPI-PD) and/or predicted impact values (PIV) for several next component options (NCO), and
- wherein the user interface (UI) outputs the individual probability distribution (KPI-PD) and/or predicted impact value (PIV) for each next component option (NCO).

5. The method according to claim 4, with the additional operations of

- detecting (OP8), by the user interface (UI), a user interaction selecting one of the next component options (NCO), and
- completing (OP9), by a processor, the current partial design (CPD) with the selected next component option (NCO), thereby producing a completed design (CD).

6. The method according to claim 5, with the additional operation of

- automatically manufacturing (OP10), by an automated plant, the completed design (CD), thereby producing the technical system.

7. The method according to any of the preceding claims,

with the initial operation of

- training (OP4), by a training module, the machine learning model (MLM) with training examples, with each training example containing

- a partial design (PD),
- a candidate next component (CNC), and
- a best value for the design key performance indicator (D-KPI) computed by a simulation environment (SE) for a completed design (CD), wherein the completed design (CD) is reachable and feasible when adding the candidate next component (CNC) to the partial design (PD).

8. The method according to claim 7, wherein the training examples are initially prepared with the following operations:

- generating (OP1), by a processor executing a SAT solver, the training examples by taking partial designs (PD) and candidate next components (CNC) as input and sampling with feasibility constraints in order to produce expanded designs (ED), with the expanded designs (ED) consisting of samples of a design space that are each reachable and feasible given a set of component compatibility constraints when combining a partial design (PD) with one of the candidate next components (CNC),
- iterating (OP2) the generating (OP1) operation, using the expanded designs (ED) as partial designs (PD), until completed designs (CD) are reached, and
- simulating (OP3), by the simulation environment (SE), each completed design (CD) in order to compute its value for the design key performance indicator (D-KPI).

9. A system for automated support of a design of a technical system, comprising:

- a machine learning model (MLM), configured for

- receiving (OP5) a current partial design (CPD) of a technical system and a candidate component (CC) for a next design step of designing the technical system, and
- computing (OP6)

- a probability distribution (KPI-PD), which is a probability distribution over changes of a design key performance indicator (D-KPI) if the candidate component (CC) is added to the current partial design (CPD), with the design key performance indicator (D-KPI) describing a property of the technical system, and/or

- a predicted impact value (PIV) predicting an absolute value of the design key performance indicator (D-KPI) or a change of the design key performance indicator (D-KPI) if the candidate component (CC) is added to the current partial design (CPD), and

- a user interface (UI) with a display, configured for outputting (OP7) the probability distribution (KPI-PD) and/or the predicted impact value (PIV).

**10.** Computer program,

- which is being executed by one or more processors of a computer system and performs the method according to one of the method claims.

**11.** Computer program product with instructions executable by one or more processors of a computer system, wherein execution of the instructions causes the computer system to perform the method according to one of the method claims.

**12.** Computer-readable storage media having stored thereon:

- instructions executable by one or more processors of a computer system, wherein execution of the instructions causes the computer system to perform the method according to one of the method claims.

# FIG 1

EP 4 137 982 A1

FIG 2

# FIG 3

EP 4 137 982 A1

# FIG 4

## FIG 5

OP1

OP2

OP3

OP4

OP5

OP6

OP7

OP8

OP9

OP10

## FIG 6a

electrical

electrical

electrical

electrical

electrical

ice_throttle

ice_throttle

rotational

battery_0

motor_0

ICE_0

rotational

rotational

rotational

motor_1

rotational

gearbox_0

HV

frontaxle_indiv_0

rotational

rotational

rearaxle_diff_0

rotational

vehicle_speed

chassis_fr

chassis_fr

vehicle_0

vehicle_speed

chassis_fl

chassis_rl

chassis_rr

chassis_fl

chassis_rr

chassis_rl

## FIG 6b

| F1 | F2 | F3 | F4 |
|----|----|----|----|
| 1.2 | 50 | 90 | 0 |
| 2.2 | 10 | 0 | 35 |
| 1.0 | 0 | 40 | 90 |
| 1.8 | 30 | 0 | 45 |

FIG 7

EP 4 137 982 A1

## FIG 8a

## FIG 8b

## FIG 9

FIG 10

# FIG 11

# FIG 12

EP 4 137 982 A1

FIG 13

EP 4 137 982 A1

# FIG 14

ID

KG

ATT

| F1 | F2 | F3 | F4 |
|-----|-----|-----|-----|
| 1.2 | 50 | 90 | 0 |
| 2.2 | 10 | 0 | 35 |
| 1.0 | 0 | 40 | 90 |
| 1.8 | 30 | 0 | 45 |

GNN

NEM

GCNN

NE

# latent dims

# nodes

GEM

P

OM

DL

KPI

EP 4 137 982 A1

## FIG 15

NEM

NE

GCNN1

# latent dims

# nodes

$H^{(1)}$

NE

GCNN2

# latent dims

# nodes

$H^{(2)}$

C
C

# FIG 16

# FIG 17

EP 4 137 982 A1

# FIG 18

OA

USD

A

16

GCN

Mean

⋮

1

linear

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

**EP 21 19 2145**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 751 471 A1 (SIEMENS AG [DE]) 16 December 2020 (2020-12-16) | 1-10,12 | INV. G06F30/27 G06N5/00 |
| Y | * paragraphs [0001], [0002], [0007], [0021] – [0023], [0026] – [0027], [0050] – [0052]; claim 1 * * the whole document * | 1 | |
| | ----- -/-- | | |

**TECHNICAL FIELDS SEARCHED (IPC)**

G06F
G06N

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| Munich | 15 June 2022 | Dapp, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04E07)

Europäisches
Patentamt

European
Patent Office

Office européen
des brevets

**PARTIAL EUROPEAN SEARCH REPORT**

Application Number

EP 21 19 2145

## DOCUMENTS CONSIDERED TO BE RELEVANT

| Category | Citation of document with indication, where appropriate, of relevant passages | Relevant to claim |
|---|---|---|
| X | HILDEBRANDT MARCEL ET AL: "A Recommender System for Complex Real-World Applications with Nonlinear Dependencies and Knowledge Graph Context", EUROPEAN SEMANTIC WEB CONFERENCE, ESWC 2019; 16TH INTERNATIONAL CONFERENCE, ESWC 2019, PORTOROZ, SLOVENIA, JUNE 2-6, 2019, SPRINGER INTERNATIONAL PUBLISHING, CHAM, CH, vol. 11503 Chap.12, no. 558, 25 May 2019 (2019-05-25), pages 179-193, XP047514176, DOI: 10.1007/978-3-030-21348-0_12 ISBN: 9783030213480 [retrieved on 2019-05-25] * abstract * * section 4-4.1 * * section 5.2 * * the whole document * ----- | 1 |
| X | EP 3 786 851 A1 (SIEMENS AG [DE]) 3 March 2021 (2021-03-03) * paragraphs [0002], [0006]; claim 1 * * the whole document * ----- | 1 |
| Y | WO 2020/185207 A1 (SIEMENS AG [DE]; SIEMENS ENERGY INC [US]) 17 September 2020 (2020-09-17) * paragraph [0005]; claim 1 * * the whole document * ----- | 1 |

**CLASSIFICATION OF THE APPLICATION (IPC)**

**TECHNICAL FIELDS SEARCHED (IPC)**

EPO FORM 1503 03.82 (P04C10)

Europäisches
Patentamt

European
Patent Office

Office européen
des brevets

**INCOMPLETE SEARCH**
**SHEET C**

Application Number

EP 21 19 2145

```
Claim(s) completely searchable:
        1-10, 12

Claim(s) not searched:
        11

Reason for the limitation of the search:

Multiple independent claims per category (Rule 43(2) EPC), Rule 62a EPC
Claims 10 and 11 both concern computer programs, i.e., fall in the same
category as listed in the Guidelines F-IV 3.9.1 (iii) (see also paragraph
3 after the enumeration: " an objection under Rule 43(2) may be raised if
more than one claim is present from a heading (i)-(iv), for example if
there are two or more computer program [product] claims which cannot be
considered as falling under one of the exceptions of Rule 43(2) (F-IV,
3.2)".
The examiner considers that the two claims do not fall under one of the
exceptions of Rule 43(2) EPC, because they do not concern alternative
solutions to the same problem.
The applicant indicated in the response to the clarification request per
Rule 62a EPC that claim 11 should not be searched nor examined.
Therefore, the Search Report and this Preliminary opinion does not cover
said claim, and the search is incomplete.
```

## ANNEX TO THE EUROPEAN SEARCH REPORT
## ON EUROPEAN PATENT APPLICATION NO.

EP 21 19 2145

This annex lists the patent family members relating to the patent documents cited in  the above-mentioned European search report.
The members are as contained in the European Patent Office EDP file on
The European Patent Office is in no way liable for these particulars which are merely given for the purpose of information.

15-06-2022

| Patent document cited in search report | | Publication date | Patent family member(s) | | Publication date |
|---|---|---|---|---|---|
| EP  3751471 | A1 | 16-12-2020 | NONE | | |
| EP  3786851 | A1 | 03-03-2021 | CN | 114258548 A | 29-03-2022 |
|  |  |  | EP | 3786851 A1 | 03-03-2021 |
|  |  |  | EP | 3983949 A1 | 20-04-2022 |
|  |  |  | WO | 2021037603 A1 | 04-03-2021 |
| WO 2020185207 | A1 | 17-09-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20191767

- EP 21161296

**Non-patent literature cited in the description**

- **SRIVASTAVA et al.** Dropout: A Simple Way to Prevent Neural Networks from Over-fitting. Journal of Machine Learning Research, 2014, vol. 15, 1929-1958